# EUROPÄISCHE PATENTANMELDUNG

(11) **EP 3 006 923 A1**
(43) Veröffentlichungstag der Anmeldung: **13.04.2016**
(21) Anmeldenummer: 14187958.5
(22) Anmeldetag: 07.10.2014
(51) Int. Cl.: G01N 21/84

(54) **Verfahren zur Ermittlung der Orientierung einer Faserstruktur**

(71) Anmelder: Apodius UG, 52074 Aachen (DE)
(72) Erfinder: Roberz, Jonathan, 52062 Aachen (DE)
(74) Vertreter: Gesthuysen Patent- und Rechtsanwälte

(57) **Zusammenfassung**

Beschrieben und dargestellt ist Verfahren zur Ermittlung der Orientierung wenigstens einer Faserstruktur, insbesondere einer Faserstruktur in einem Faserverbundwerkstoff, wobei die Faserstruktur mittels optischer Messung identifiziert wird, indem wenigstens ein mehrere Pixel aufweisendes Bild der Faserstruktur mit einem optischen Aufnahmegerät (21) aus einer Aufnahmeposition erfasst wird (1), wobei den Pixeln Intensitätsdaten zugeordnet werden (2), ein Strukturtensor wenigstens eines Pixels aus den pixelbasierten Intensitätsdaten bestimmt wird (3), die Orientierung der Faserstruktur auf Basis des Strukturtensors bestimmt wird (4).

Der Erfindung liegt die Aufgabe zugrunde, ein Verfahren sowie eine Vorrichtung zur Ermittlung der Orientierung einer Faserstruktur, insbesondere einer Faserstruktur in einem Verbundwerkstoff anzugeben, bei dem gewährleistet wird, dass ein dreidimensionales Objekt, das eine Faserstruktur aufweist, vollständig auf die Beschaffenheit der Faserorientierung untersucht wird.

Die Aufgabe wird bei dem in Rede stehenden Verfahren dadurch gelöst, dass die Aufnahmeposition des optischen Aufnahmegeräts (21) zu einem dreidimensionalen Objekt erfasst wird (5), wobei die Oberfläche des dreidimensionalen Objekts die Faserstruktur aufweist, dass aus der Aufnahmeposition ein Bild der Oberfläche des dreidimensionalen Objekts erfasst wird (1), dass die Orientierung der Faserstruktur in dem Bild ermittelt wird (4), dass ein dreidimensionales Gittermodell mit Gittermaschen aus Solldaten der Oberfläche des dreidimensionalen Objekts erfasst wird (6), dass das Bild aus der Perspektive der Aufnahmeposition in eine Projektion auf den entsprechenden Bereich des dreidimensionalen Modells transformiert wird (7) und dass die ermittelte Orientierung der Faserstruktur in dem Bild auf die korrespondierende Gittermasche übertragen (8) wird und damit die räumliche Orientierung der Faserstruktur auf der Oberfläche des dreidimensionalen Objekts ermittelt wird (9).

## Beschreibung

Die Erfindung betrifft ein Verfahren zur Ermittlung der Orientierung wenigstens einer Faserstruktur, insbesondere einer Faserstruktur in einem Faserverbundwerkstoff, wobei die Faserstruktur mittels optischer Messung identifiziert wird, indem wenigstens ein mehrere Pixel aufweisendes Bild der Faserstruktur mit einem optischen Aufnahmegerät aus einer Aufnahmeposition erfasst wird, wobei den Pixeln Intensitätsdaten zugeordnet werden, ein Strukturtensor wenigstens eines Pixels aus den pixelbasierten Intensitätsdaten bestimmt wird und die Orientierung der Faserstruktur auf Basis des Strukturtensors bestimmt wird.

Ferner betrifft die Erfindung eine Vorrichtung zur Ermittlung der Orientierung wenigstens einer Faserstruktur, insbesondere einer Faserstruktur in einem Faserverbundwerkstoff, mit mindestens einem optischen Aufnahmegerät, mit mindestens einem Beleuchtungssystem, mit mindestens einem beweglichen Bauteil zur Ausrichtung des optischen Aufnahmegeräts in interessierende Raumrichtungen und mit mindestens einer Auswerteeinheit, wobei das optische Aufnahmegerät an dem beweglichen Bauteil befestigt ist.

In der Industrie gewinnen Leichtbauwerkstoffe immer mehr an Bedeutung. Besonders gefragt sind Faserverbundwerkstoffe wie beispielsweise carbonfaserverstärkte Kunststoffbauteile, die durch hohe Festigkeit und Steifigkeit ausgezeichnet sind, die aber gleichzeitig nur etwa die Hälfte von vergleichbaren Stahlkonstruktionen wiegen. Die Fertigung eines solchen Werkstoffs gliedert sich dabei in den lagenweisen Aufbau von Gewebe- und Geflechtstrukturen von Kohlefasern, die dann in einen Kunststoffharz eingebettet werden. Die Festigkeit und die Steifigkeit eines solchen Materials sind entlang der Faserrichtung deutlich höher als quer zur Faserrichtung. Daher geschieht der Aufbau eines Faserverbundwerkstoffes lagenweise, um einzelne Faserorientierungen in verschiedenen Richtungen zu verlegen. Die optimale Festigkeit und Steifigkeit kann vor der Fertigung simulativ ermittelt werden.

Ein großer Nachteil der faserverstärkten Kunststoffbauteile sind die hohen Fertigungskosten, die zum großen Teil dadurch entstehen, dass viele Schritte im Herstellungsprozess manueller Natur sind.

So ist es im Stand der Technik, beispielsweise in der Automobilindustrie, auch bisweilen üblich, dass die Endkontrolle eines fertigen Bauteils manuell durch einen Mitarbeiter durchgeführt wird. Dieser kontrolliert das Bauteil auf Fehlstellen oder ungewünschte Anomalien, die Orientierung von Faserstrukturen des Bauteils kann so nicht gut überprüft werden. Eine gleichbleibende Qualität der Endkontrolle kann so nur schlecht gewährleistet werden.

Der Anmelderin ist aus der Praxis ein System bekannt, das es ermöglicht, mittels optischer Messung die Orientierung einer flächig erstreckten, also im Wesentlichen zweidimensionalen Faserstruktur zu ermitteln. Das System umfasst dabei ein gekapseltes Gehäuse, ein optisches Aufnahmegerät sowie ein Beleuchtungssystem zur diffusen Ausleuchtung. Mittels computergestützter Analysealgorithmen können aus aufgenommenen Bildern der Faserstruktur eines im Wesentlichen zweidimensionalen Bauteils die Faserorientierungen in dem aufgenommenen Bereich bestimmt werden. Somit ist es möglich, reproduzierbare Aussagen über die Beschaffenheit der Faserorientierungen zu treffen. Das aus dem Stand der Technik bekannte System und Analyseverfahren weist jedoch den Nachteil auf, dass auch diese Art der Qualitätskontrolle größtenteils nur manuell durchgeführt werden kann. Zudem kann ein Bauteil nur punktuell und zweidimensional untersucht werden. Werden maßgebliche Bereiche bei der Untersuchung nicht berücksichtigt, können Fehlstellen unbemerkt weiterverarbeitet werden und das Bauteil unter Umständen unbrauchbar bzw. anfällig gegenüber Belastungen machen.

Der Erfindung liegt daher die Aufgabe zugrunde, ein Verfahren sowie eine Vorrichtung zur Ermittlung der Orientierung einer Faserstruktur, insbesondere einer Faserstruktur in einem Verbundwerkstoff, anzugeben, bei dem gewährleistet wird, dass ein dreidimensionales Objekt, das eine Faserstruktur aufweist, möglichst umfassend auf die Beschaffenheit der Faserorientierung untersucht wird.

Die zuvor hergeleitete Aufgabe ist bei dem zuvor aufgezeigten Verfahren dadurch gelöst, dass die Aufnahmeposition des optischen Aufnahmegeräts zu einem dreidimensionalen Objekt erfasst wird, wobei die Oberfläche des dreidimensionalen Objekts die Faserstruktur aufweist, dass aus der Aufnahmeposition ein Bild der Oberfläche des dreidimensionalen Objekts erfasst wird, dass die Orientierung der Faserstruktur in dem Bild ermittelt wird, dass ein dreidimensionales Gittermodell mit Gittermaschen aus Solldaten der Oberfläche des dreidimensionalen Objekts erfasst wird, dass das Bild aus der Perspektive der Aufnahmeposition in eine Projektion auf den entsprechenden Bereich des dreidimensionalen Modells transformiert wird und dass die ermittelte Orientierung der Faserstruktur in dem Bild auf die korrespondierende Gittermasche übertragen wird und damit die räumliche Orientierung der Faserstruktur auf der Oberfläche des dreidimensionalen Objekts ermittelt wird.

Bei dem erfindungsgemäßen Verfahren wird die Orientierung einer Faserstruktur folglich für das gesamte dreidimensionale Objekt erfasst und entsprechend der vorher bestimmten oder bekannten Geometrie des Objektes räumlich bestimmt. Die ermittelten räumlichen Orientierungsdaten können dann auch dargestellt werden. Dabei entsteht eine dreidimensionale Darstellung, die zuvor aus zweidimensionalen Orientierungsinformationen gewonnen wurde. Die Orientierung der Faserstruktur kann auch erst im Anschluss an die Übertragung der Aufnahmen auf die Gittermaschen des dreidimensionalen Gittermodells berechnet werden. Die Strukturtensorbestimmung eines Pixels aus den pixelbasierten Intensitätsdaten ist an sich bekannt. Die Strukturtensorbestimmung für ein Pixel kann sich auf die Pixel in seiner unmittelbaren Umgebung beziehen, das heißt auf direkt benachbarte Pixel. Für einen geringeren Rechenaufwand kann aber auch ein größerer Abstand zu Referenzpixeln gewählt werden.

Wenn davon die Rede ist, dass ein dreidimensionales Gittermodell mit Gittermaschen aus Solldaten der Oberfläche des dreidimensionalen Objekts erfasst wird, dann ist damit gemeint, dass die Solldaten die geplante, ideale Geometrie der Objektoberfläche darstellen. Es kann sich hier um konstruktive Daten, beispielsweise um CAD-Daten handeln, die im vorangehenden Fertigungsprozess für das dreidimensionale Objekt verwendet worden sind.

Ein Vorteil des erfindungsgemäßen Verfahrens ist, dass durch die Ermittlung und ggf. Darstellung der Orientierung der Faserstruktur mittels eines dreidimensionalen Modells des untersuchten Objekts Fehlstellen effizient erkannt werden können. Ebenfalls ist der gesamte, globale Verlauf der Orientierung der verteilten Faserstrukturen gut nachvollziehbar.

Gemäß einer Ausgestaltung des Verfahrens wird die Orientierung der Faserstruktur für eine Umgebung größer einem Pixel durch Integration über die ermittelten Orientierungen der Faserstruktur in dieser Umgebung mit einer Gewichtung der relativen Stärke ihrer Faserorientierung und/oder Texturkohärenz berechnet. Somit kann eine mittlere Orientierung der Faserstruktur in einer Umgebung bestimmt werden. Die Gewichtung der Einzelorientierungen wird vorzugsweise nahe des Zentrums der berücksichtigten Umgebung größer gewählt als für Faserorientierungen im Randbereich der Umgebung.

Abweichungen von einer Soll-Vorgabe der Orientierung der Faserstrukturin einer Umgebung von Pixeln bei der Integration auf Basis ihrer abweichenden Faserorientierung und/oder Texturkohärenz können in einer weiteren Ausgestaltung erkannt werden und als Fehler und/oder Merkmale in der Faserstruktur entsprechend der Art der Abweichung klassifiziert und/oder in der Oberfläche des dreidimensionalen Objekts eine Kennzeichnung und/oder ein Signal betreffend Ort und/oder Beschaffenheit der Abweichung ausgegeben werden. Dadurch werden auch etwaige durch die Apparatur verursachte Fehler, weitestgehend vermieden.

Eine weitere Ausgestaltung des Verfahrens sieht vor, dass die ermittelte Orientierung der Faserstruktur in dem Bild vektorbasiert dargestellt wird. Die Daten der Orientierung können zudem unabhängig von den aufgenommenen Bildern der Faserstruktur das Bild als Vektordarstellung überlagern.

Eine andere Ausgestaltung des Verfahrens sieht vor, dass die ermittelte Orientierung der Faserstruktur in dem Bild durch grafische Kenntlichmachung dargestellt wird. Dabei können für unterschiedliche Orientierungen, das heißt für unterschiedliche Winkel der Faserausrichtungen, beispielsweise unterschiedliche Farbkodierungen verwendet werden, sodass ein (Farb-)Kontrast zwischen verschiedenen Orientierungen hergestellt wird.

Darüber hinaus ist in einer Ausgestaltung des Verfahrens vorgesehen, dass eine Kombination aus grafischer Kenntlichmachung und vektorieller Darstellung für die Darstellung der Orientierung verwendet wird. So kann die vektorbasierte Darstellung die grafische Kenntlichmachung überlagern. Dem Benutzer steht dafür eine grafische Oberfläche an einer Auswerteeinheit zur Verfügung. Da die Orientierungsdaten nicht lediglich als Bilddateien, sondern in Form von Rohdaten, also vektorieller Notation vorliegen, können beliebige Ansichten des dreidimensionalen Modells und der Orientierung gewählt werden. Aufgrund der Eigenschaften der linearen Algebra können die Ansichten beliebig skaliert, vergrößert und verkleinert werden. Ebenso sind einzelne Abschnitte der gesamten Geometrie bzw. der ermittelten Orientierung einsehbar. Es ist ebenfalls denkbar, dass eine Ansicht der zuvor - beispielsweise durch Simulation - als ideal bestimmten Orientierung darstellbar ist. Einzelne Ansichten können entsprechend überlagert werden.

In einer bevorzugten Ausgestaltung des Verfahrens wird die Abweichung zwischen einer Soll-Orientierung der Faserstruktur und der ermittelten Orientierung der Faserstruktur bestimmt. Dadurch kann ein Vergleich der gewünschten, idealen Orientierung mit der tatsächlich realisierten oder realisierbaren Orientierung der Faserstruktur gezogen werden. Ebenfalls sind statistische Auswertungen denkbar, um beispielsweise einen prozentualen Anteil der Übereinstimmung bzw. Abweichungen zu erhalten.

Eine weitere Ausgestaltung sieht vor, dass bei einer zu großen Abweichung zwischen der ermittelten Orientierung der Faserstruktur und der Soll-Orientierung der Faserstruktur in der Oberfläche des dreidimensionalen Objekts eine Kennzeichnung und/oder ein Signal betreffend Ort und/oder Beschaffenheit der Abweichung ausgegeben wird. Als Signal können Warnmeldungen über zu große Abweichungen oder ähnliches in Betracht gezogen werden. Die Kennzeichnung kann als farbliche Darstellung der Abweichung realisiert werden. Besonders anschaulich ist dieser Vergleich bei der Überlagerung der Soll-Orientierung mit der ermittelten Orientierung der Faserstruktur, wobei die Unstimmigkeiten optisch kenntlich gemacht werden.

Das Verfahren lässt sich weiterentwickeln, indem beispielsweise in einem laufenden Produktionsprozess darüber entschieden wird, ob ein gefertigtes Bauteil Ausschuss ist oder nicht. Mit den ermittelten Abweichungsinformationen ist dann sogar die Möglichkeit gegeben, auf den Produktionsprozess des gefertigten Bauteils so Einfluss zu nehmen, dass die Abweichungen reduziert oder ganz vermieden werden.

In einer weiteren Ausgestaltung des Verfahrens ist es vorgesehen, dass die Geometrie der Oberfläche des dreidimensionalen Objekts zusätzlich durch Messung erfasst wird, insbesondere mittels Lichtschnittverfahren oder Triangulation. Dadurch ist ein Vergleich zwischen der tatsächlichen Geometrie und der Soll-Geometrie des dreidimensionalen Objekts möglich.

Eine bevorzugte Ausgestaltung des Verfahrens sieht daher vor, dass die Abweichung der messtechnisch erfassten Geometrie der Oberfläche des dreidimensionalen Objekts von dem dreidimensionalen Gittermodell mit Gittermaschen aus Solldaten der Oberfläche des dreidimensionalen Objekts ermittelt wird. Auch bei dieser Ausgestaltung ist es denkbar, statistische Auswertungen vorzunehmen, um einen Übereinstimmungsgrad zwischen Soll-Geometrie und tatsächlicher Geometrie zu ermitteln.

In einer weiteren bevorzugten•Ausgestaltung des Verfahrens wird bei einer zu großen Abweichung der messtechnisch erfassten Geometrie der Oberfläche des dreidimensionalen Objekts von dem dreidimensionalen Gittermodell mit Gittermaschen aus Solldaten der Oberfläche des dreidimensionalen Objekts ein Signal betreffend Ort und/oder Beschaffenheit der Abweichung ausgegeben. Wie bereits bei der Bestimmung der Abweichung der Orientierungsdaten können auch große Abweichungen der Geometriedaten durch beispielsweise Warnhinweise bekannt gemacht werden. Ebenfalls können die entsprechenden Unterschiede farblich dargestellt werden, beispielsweise bei einer Überlagerung der Soll-Geometrie mit der tatsächlichen, messtechnisch erfassten Geometrie.

Eine weitere Ausgestaltung des erfindungsgemäßen Verfahrens sieht vor, dass das Gittermodell mit Gittermaschen aus den Solldaten der Oberfläche des dreidimensionalen Objekts bei Abweichungen von der messtechnisch erfassten Geometrie der Oberfläche des dreidimensionalen Objekts an die messtechnisch erfasste Geometrie der Oberfläche des dreidimensionalen Objekts angepasst wird. Anders als bei der Erfassung der Orientierungen der Faserstruktur ist es sinnvoll die Geometrie des dreidimensionalen Objekts anzupassen. Für die tatsächliche Geometrie - sollte diese sehr von der idealen bzw. der Soll-Geometrie abweichen - kann in einem weiteren Schritt eine weitere Simulation oder andere Analyse der idealen Faserorientierung berechnet werden. Diese kann dann wiederrum mit den ermittelten Daten der Faserorientierung verglichen werden.

In einer letzten Ausgestaltung des erfindungsgemäßen Verfahrens wird die für eine Umgebung ermittelte Orientierung der Faserstruktur um eine dritte Dimension zu einer dreidimensionalen lokalen Orientierung mit einer Raumkoordinate ergänzt, die sich erst nach Projektion der ermittelten Orientierung der Faserstruktur auf das dreidimensionale Gittermodell mit Gittermaschen für die betrachtete Umgebung ergibt. Durch Überlagerung der zweidimensionalen Aufnahme mit dem dreidimensionalen Objekt kann die Orientierung ebenfalls dreidimensional dargestellt werden.

Weiterhin wird die zuvor hergeleitete und aufgezeigte Aufgabe gemäß einer weiteren Lehre der Erfindung bei einer eingangs genannten Vorrichtung zur Ermittlung der Orientierung wenigstens einer Faserstruktur gelöst mit einer Vorrichtung mit mindestens einem optischen Aufnahmegerät, mit mindestens einem Beleuchtungssystem, mit mindestens einem beweglichen Bauteil zur Ausrichtung des optischen Aufnahmegeräts in interessierende Raumrichtungen und mit mindestens einer Auswerteeinheit, wobei das optische Aufnahmegerät an dem beweglichen Bauteil befestigt ist und wobei das optische Aufnahmegerät und/oder das Beleuchtungssystem und/oder das bewegliche Bauteil und/oder die Auswerteeinheit zur Umsetzung des oben geschilderten Verfahrens nach wenigstens einer der zuvor genannten Ausgestaltungen ausgestaltet. Das optische Aufnahmegerät kann beispielsweise eine Kamera sein. Diese kann außerdem einen Autofokus aufweisen, ist aber nicht auf diese Ausgestaltung begrenzt. Bei dem beweglichen Bauteil handelt es sich vorzugsweise um einen Roboterarm, der es ermöglicht, das System aus Kamera und Beleuchtungssystem in verschiedene Aufnahmepositionen zu überführen. Wenn von einem System aus Kamera und Beleuchtungssystem die Rede ist, dann muss das Beleuchtungssystem nicht zwangsläufig mit der Kamera verbunden sein. Die Beleuchtung kann beispielsweise auch von einem bestimmten Punkt, oder ebenfalls variabel, aber unabhängig von dem optischen Aufnahmegerät bewegt werden. Ein Roboterarm ist ebenfalls nicht zwingend notwendig. Das optische Aufnahmegerät kann ebenfalls an einem Punkt fixiert sein, oder steckbar für verschiedene Positionen ausgebildet sein. Die Möglichkeiten, ein optisches Aufnahmegerät über ein dreidimensionales Objekt hinweg zu bewegen, sind sehr vielfältig und sollen mit den beschriebenen Ausgestaltungen nicht erschöpft sein. Die Anordnung im Raum, das heißt die exakte Position des beweglichen Bauteils und des optischen Aufnahmegerätes relativ zu dem dreidimensionalen Objekt, muss bekannt sein. Dafür kann beispielsweise ein Tracking System verwendet werden. Denkbar sind kamerabasierte Trackingsysteme, Lasertracker, Lasertracer oder auch Indoor-GPS.

Im Einzelnen gibt es eine Vielzahl von Möglichkeiten, das erfindungsgemäße Verfahren und die entsprechende erfindungsgemäße Vorrichtung zur Ermittlung wenigstens einer Faserstruktur auszugestalten und weiterzubilden. Dazu wird verwiesen einerseits auf die dem Patentanspruch 1 nachgeordneten Patentansprüche bzw. den Patentanspruch 14, andererseits auf die folgende Beschreibung von Ausführungsbeispielen in Verbindung mit der Zeichnung. In den Zeichnungen zeigen
- Fig. 1: einen schematischen, die Zusammenhänge verdeutlichenden Ablauf eines Verfahrens zur Ermittlung der Orientierung wenigstens einer Faserstruktur,
- Fig. 2: einen erweiterten schematischen, die Zusammenhänge verdeutlichenden Ablauf eines Verfahrens zur Ermittlung wenigstens einer Faserstruktur, basierend auf Fig. 1,
- Fig. 3: einen erweiterten schematischen, die Zusammenhänge verdeutlichenden Ablauf eines Verfahrens zur Ermittlung wenigstens einer Faserstruktur, basierend auf Fig. 2,
- Fig. 4: einen erweiterten schematischen, die Zusammenhänge verdeutlichenden Ablauf eines Verfahrens zur Ermittlung wenigstens einer Faserstruktur, basierend auf Fig. 3,
- Fig. 5: einen erweiterten schematischen, die Zusammenhänge verdeutlichenden Ablauf eines Verfahrens zur Ermittlung wenigstens einer Faserstruktur, basierend auf Fig. 4,
- Fig. 6: einen erweiterten schematischen, die Zusammenhänge verdeutlichenden Ablauf eines Verfahrens zur Ermittlung wenigstens einer Faserstruktur, basierend auf Fig. 5 und
- Fig. 7: ein Ausführungsbeispiel einer erfindungsgemäßen Vorrichtung zur Ermittlung der Orientierung der Faserstruktur.

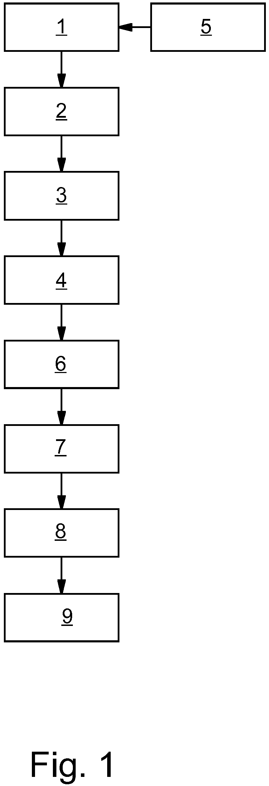

Die Fig. 1 beschreibt den Ablauf eines Verfahrens zur Ermittlung der Orientierung von Faserstrukturen. Im einem ersten Schritt ist es notwendig, dass ein Bild der zu untersuchenden Faserstruktur bzw. der Struktur des zu untersuchenden Faserverbundwerkstoffs aufgenommen wird 1. Anhand der Pixel des digitalen Bilds können bildanalytische Verfahrensschritte eingeleitet werden. Zunächst werden den Pixeln Intensitätsdaten zugeordnet 2. Bei der Untersuchung von Faserverbundwerkstoffen bietet sich eine Untersuchung der Graustufenintensität an. Für die jeweiligen Pixel werden in Schritt 3 Strukturtensoren aus den pixelbasierten Intensitätsdaten der unmittelbaren Umgebung bestimmt; eine solche Strukturtensorbestimmung für Pixel eines Bildes ist an sich bekannt. Auf Basis des Strukturtensors wird die Orientierung der Faserstruktur im erfassten Bild in Schritt 4 errechnet.

Um eine qualifizierte Aussage über die errechnete Orientierung machen zu können, ist es erforderlich, dass die räumliche Position des optischen Aufnahmegerätes 21 eindeutig bestimmt ist. Insbesondere muss die Position des optischen Aufnahmegerätes relativ zum sich in alle Raumrichtungen erstreckenden Faserverbundwerkstoff vor Aufnahme des Bildes bestimmt werden 5.

Ziel des Verfahrens ist es, die Faserstruktur und vor allem die Orientierung der Faserstruktur im räumlich erstreckten Werkstoff des dreidimensionalen Objekts mit Hilfe eines dreidimensionalen Modells aus den Solldaten der Oberfläche des dreidimensionalen Objekts zu ermitteln, um weitere Analysen zuzulassen. Dafür wird in diesem Beispiel das dreidimensionale Modell des Faserverbundwerkstoffs in einem Schritt 6 erstellt, wobei die Ermittlung des digitalen Modells nicht an die vorhergegangenen Schritte gebunden ist. So ist es auch möglich, dies zeitgleich mit der Bildaufnahme bzw. unabhängig von der Orientierungsbestimmung auszuführen.

Die Oberfläche des dreidimensionalen Modells wird diskretisiert, das heißt mit einer Gitterstruktur überlagert, sodass die gesamte Oberfläche in Gittermaschen aufgeteilt ist. Die Gittermaschen sind in diesem Fall dreieckig ausgestaltet, können aber auch eine beliebige andere Form aufweisen.

Die Bilder der Oberfläche werden zwar aus unterschiedlichen Aufnahmepositionen aufgenommen. Allerdings ist eine Aufnahmeposition nicht zwingend normal zur Oberfläche des Faserverbundwerkstoffs. Bei einer räumlich strukturierten Oberfläche ist es natürlich meist auch gar nicht möglich, dass die optische Achse des Aufnahmegerätes 21 normal zu jedem Punkt der erfassten Oberfläche ist, dies wird sogar nur für die wenigsten Pixel und korrespondierenden Punkte der Oberfläche gelten. In Schritt 7 werden die Bilder daher einer mathematischen Transformation unterzogen, um sie aus der Perspektive der Aufnahmeposition in eine Normalprojektion bezüglich des dreidimensionalen Gitters bzw. der Gittermaschen zu überführen. Dieser Vorgang wird für jede Gittermasche wiederholt. Wenn die einzelnen Bilder in der entsprechenden Normalprojektion vorliegen, werden diese in Schritt 8 auf das dreidimensionale Gittermodell übertragen, sodass je ein Bild für eine Gittermasche in der Normalprojektion der Oberfläche des dreidimensionalen Modells angeordnet ist. So wird die räumliche Orientierung der Faserstruktur auf der Oberfläche des dreidimensionalen Objekts ermittelt.

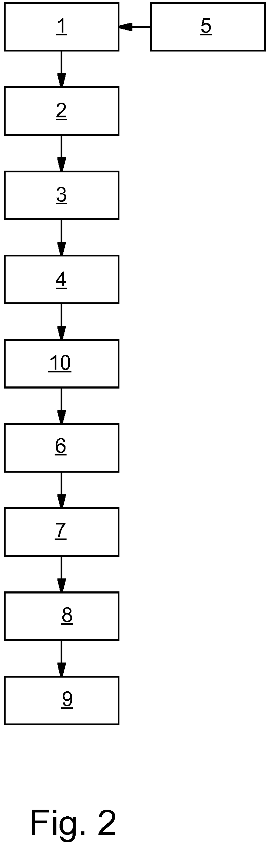

Fig. 2 zeigt eine Erweiterung des Verfahrensablaufs. In Schritt 10, der in diesem Beispiel nach der Bestimmung der Orientierung der Faserstruktur 4 durchgeführt wird, wird vor der Transformation und Übertragung der Bilder auf das dreidimensionale Modell eine globale Orientierung für eine Umgebung, die größer ist als ein Pixel, ermittelt. Die Berechnung erfolgt dabei durch Integration der ermittelten Orientierungen innerhalb der Umgebung, wobei die Orientierungen des Fasern der Umgebung auch unterschiedlich gewichtet in die Integration eingehen können, beispielsweise mit einer starken Gewichtung des Zentrums der Integrationsumgebung. Dadurch wird für eine Umgebung eine mittlere, gewichtete Orientierung bestimmt.

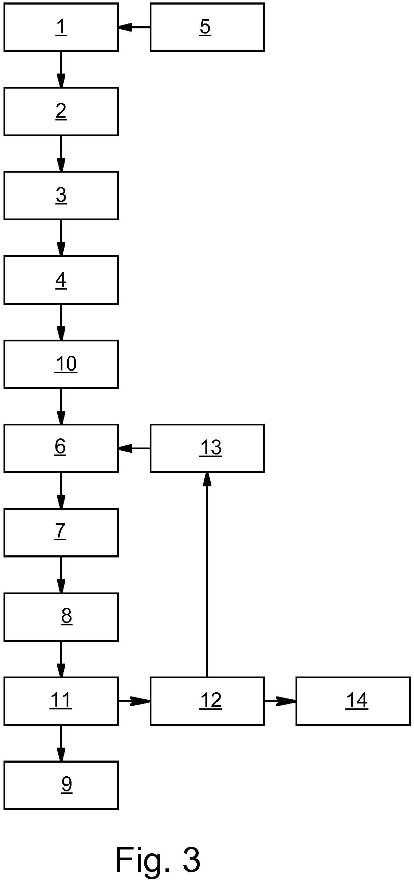

Die Fig. 3 zeigt eine mögliche Erweiterung des Verfahrens. In Schritt 11, der nach der Übertragung der transformierten und skalierten Bilder auf das dreidimensionale Gittermodell 8 erfolgt, wird die Abweichung der ermittelten Orientierung der Faserstruktur von der Soll-Orientierung der Faserstruktur ermittelt. Bei einer zu großen Abweichung zwischen der Soll-Orientierung und der ermittelten Orientierung der Faserstruktur wird die betreffende Stelle farblich gekennzeichnet 13, sodass ein Benutzer Abweichungen an einer Auswerteeinheit schnell lokalisieren kann. Zusätzlich kann eine ermittelte Abweichung durch ein Signal 14 hervorgehoben werden.

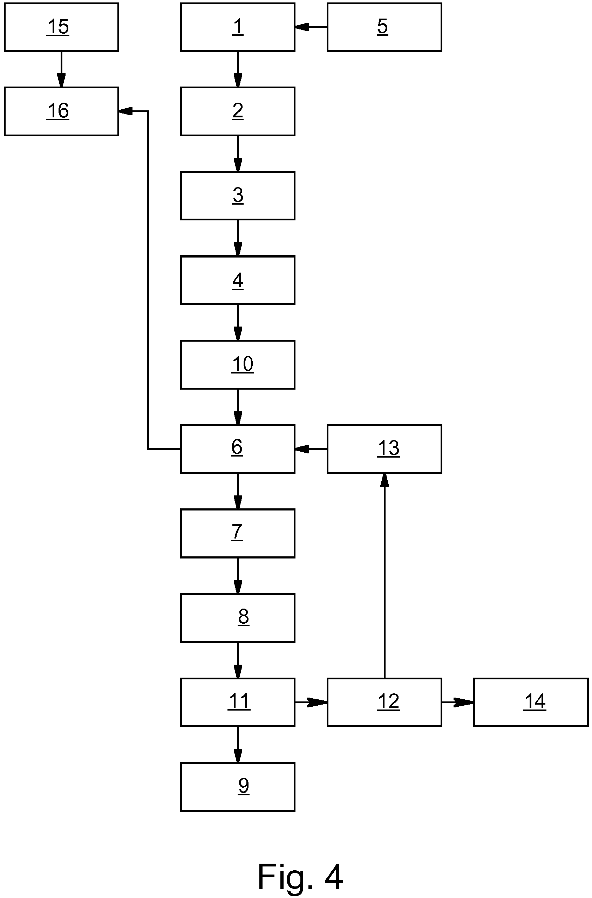

Die Fig. 4 zeigt ausgehend von Fig. 3 eine Erweiterung des Verfahrens und des Verfahrensablaufs, bei dem zusätzlich zur Bestimmung der Abweichung der Soll-Orientierung der Faserstruktur 11 von der ermittelten Orientierung der Faserstruktur die Geometrie des dreidimensionalen Objekts bzw. dem Faserverbundwerkstoff messtechnisch erfasst wird 15. Ein verwendbares Verfahren zur Bestimmung der Geometrie ist beispielsweise die Triangulation. Ist die Geometrie erfasst, werden die Daten mit den Solldaten des dreidimensionalen Gittermodells verglichen und analog zur Bestimmung der Abweichung beschrieben in Fig. 3 die Abweichung zwischen der Soll-Geometrie und der tatsächlichen Geometrie des dreidimensionalen Objekts ermittelt 16.

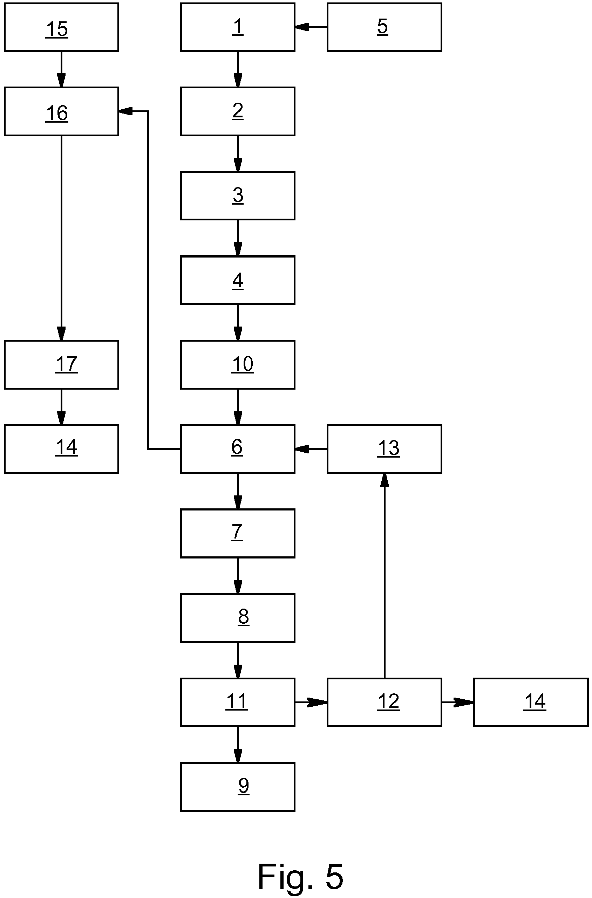

In Fig. 5 ist eine Erweiterung des Verfahrens ausgehend von Fig. 4 dargestellt. Die Abweichung der messtechnisch ermittelten Geometrie von der Soll-Geometrie des dreidimensionalen Gittermodells 16 wird anschließend bewertet. Bei zu großer Abweichung 17 wird ein für den Benutzer verständliches Signal ausgegeben. Der Benutzer kann dann die Abweichung lokalisieren und sich ein Bild über die Beschaffenheit machen.

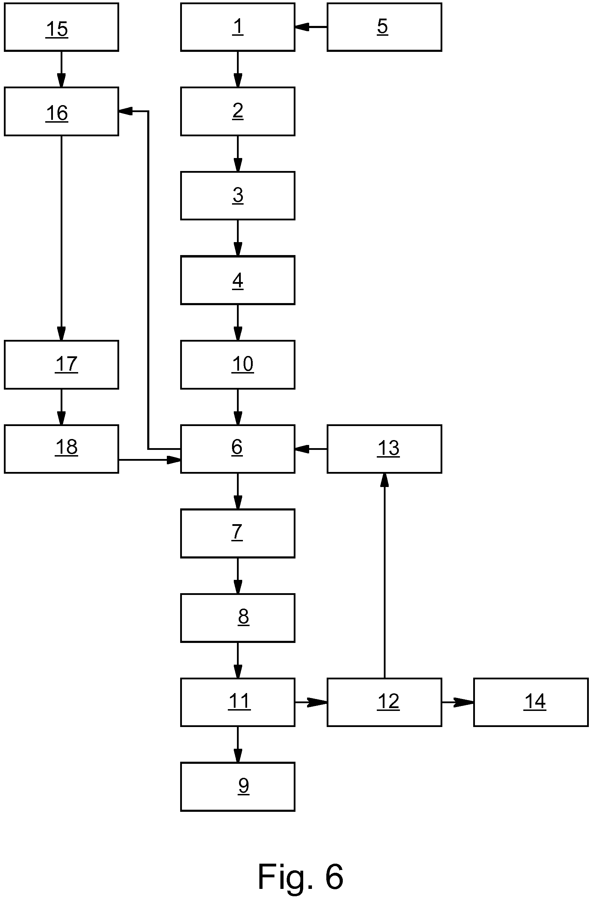

In einer anderen Erweiterung des Verfahrens, dargestellt in Fig. 6, wird das dreidimensionale Gittermodell bei zu großer Abweichung von der tatsächlich ermittelten Geometrie des dreidimensionalen Objekts an die ermittelten Daten angepasst 18, sodass das dreidimensionale Modell der Realität angeglichen wird.

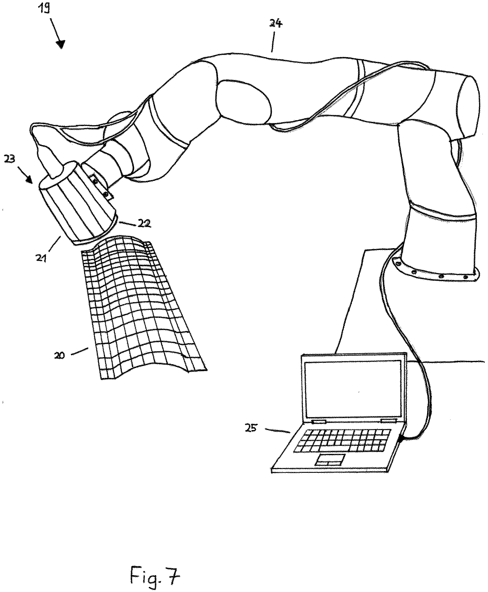

Die Fig. 7 zeigt ein mögliches Ausführungsbeispiel einer Vorrichtung 19 zur Bestimmung der Faserstruktur von beispielsweise Faserverbundwerkstoffen 20. Das dreidimensionale Objekt, also ein räumlich geformter Faserverbundwerkstoff 20 wird in der Nähe der Vorrichtung 19 platziert. Zur Vorrichtung gehört ein optisches Aufnahmegerät 21 und ein Beleuchtungssystem 22. Das Beleuchtungssystem 22 dient zur Ausleuchtung der Faserstruktur und beleuchtet das Analysegebiet diffus. In diesem Ausführungsbeispiel ist das Beleuchtungssystem 22 im selben Gehäuse wie das optische Aufnahmegerät 21 untergebracht, wobei die Beleuchtung auch separat ausgestaltet sein kann. Das System 23, umfassend Kamera bzw. optisches Aufnahmegerät 21 und Beleuchtungssystem 22, ist an einem beweglichen Bauteil 24 befestigt. In diesem Fall handelt es sich um einen schwenk- und drehbaren Roboterarm, der es ermöglicht, das gekapselte System in beliebige Aufnahmepositionen relativ zum Faserverbundwerkstoff 20 zu überführen. Die Steuerung der Vorrichtung 19 sowie die Auswertung und Durchführung des Verfahrens werden über eine Auswerteeinheit 25 bedient und durchgeführt. Dabei steht dem Benutzer eine grafische Oberfläche zur Verfügung, bei der es möglich ist, verschiedene Ansichten der dreidimensionalen Darstellung von Orientierung und Geometrie aufzurufen.

## Patentansprüche

1. Verfahren zur Ermittlung der Orientierung wenigstens einer Faserstruktur, insbesondere einer Faserstruktur in einem Faserverbundwerkstoff, wobei die Faserstruktur mittels optischer Messung identifiziert wird, indem
- wenigstens ein mehrere Pixel aufweisendes Bild der Faserstruktur mit einem optischen Aufnahmegerät (21) aus einer Aufnahmeposition erfasst wird (1), wobei den Pixeln Intensitätsdaten zugeordnet werden (2),
- ein Strukturtensor wenigstens eines Pixels aus den pixelbasierten Intensitätsdaten bestimmt wird (3),
- die Orientierung der Faserstruktur auf Basis des Strukturtensors bestimmt wird (4),
**dadurch gekennzeichnet,**
**dass** die Aufnahmeposition des optischen Aufnahmegeräts (21) zu einem dreidimensionalen Objekt erfasst wird (5), wobei die Oberfläche des dreidimensionalen Objekts die Faserstruktur aufweist, dass aus der Aufnahmeposition ein Bild der Oberfläche des dreidimensionalen Objekts erfasst wird (1), dass die Orientierung der Faserstruktur in dem Bild ermittelt wird (4), dass ein dreidimensionales Gittermodell mit Gittermaschen aus Solldaten der Oberfläche des dreidimensionalen Objekts erfasst wird (6), dass das Bild aus der Perspektive der Aufnahmeposition in eine Projektion auf den entsprechenden Bereich des dreidimensionalen Modells transformiert wird (7) und dass die ermittelte Orientierung der Faserstruktur in dem Bild auf die korrespondierende Gittermasche übertragen (8) wird und damit die räumliche Orientierung der Faserstruktur auf der Oberfläche des dreidimensionalen Objekts ermittelt wird (9).

2. Verfahren nach Anspruch 1, **dadurch gekennzeichnet, dass** die Orientierung der Faserstruktur für eine Umgebung größer einem Pixel durch Integration über die ermittelten Orientierungen der Faserstruktur in dieser Umgebung mit einer Gewichtung der relativen Stärke ihrer Faserorientierung und/oder Texturkohärenz berechnet wird (10).

3. Verfahren nach Anspruch 2, **dadurch gekennzeichnet, dass** Abweichungen von einer Soll-Vorgabe der Orientierung der Faserstrukturin einer Umgebung von Pixeln bei der Integration auf Basis ihrer abweichenden Faserorientierung und/oder Texturkohärenz erkannt werden und als Fehler und/oder Merkmale in der Faserstruktur entsprechend der Art der Abweichung klassifiziert und/oder in der Oberfläche des dreidimensionalen Objekts eine Kennzeichnung und/oder ein Signal betreffend Ort und/oder Beschaffenheit der Abweichung ausgegeben werden.

4. Verfahren nach Anspruch 1 bis 3, **dadurch gekennzeichnet, dass** die ermittelte Orientierung der Faserstruktur in dem Bild vektorbasiert dargestellt wird.

5. Verfahren nach Anspruch 1 bis 3, **dadurch gekennzeichnet, dass** die ermittelte Orientierung der Faserstruktur in dem Bild durch grafische Kenntlichmachung dargestellt wird.

6. Verfahren nach einem der Ansprüche 4 bis 5, **dadurch gekennzeichnet, dass** die ermittelte Orientierung der Faserstruktur in dem Bild aus einer Kombination aus Vektordarstellung und grafischer Kenntlichmachung dargestellt wird.

7. Verfahren nach einem der Ansprüche 1 bis 6, **dadurch gekennzeichnet, dass** die Abweichung zwischen einer Soll-Orientierung der Faserstruktur und der ermittelten Orientierung der Faserstruktur ermittelt wird (11).

8. Verfahren nach Anspruch 7, **dadurch gekennzeichnet, dass** bei einer zu großen Abweichung (12) zwischen der ermittelten Orientierung der Faserstruktur und der Soll-Orientierung der Faserstruktur in der Oberfläche des dreidimensionalen Objekts eine Kennzeichnung (13) und/oder ein Signal (14) betreffend Ort und/oder Beschaffenheit der Abweichung ausgegeben wird.

9. Verfahren nach einem der Ansprüche 1 bis 8, **dadurch gekennzeichnet, dass** die Geometrie der Oberfläche des dreidimensionalen Objekts zusätzlich durch Messung erfasst wird (15), insbesondere mittels Lichtschnittverfahren oder Triangulation.

10. Verfahren nach Anspruch 9, **dadurch gekennzeichnet, dass** die Abweichung (16) der messtechnisch erfassten Geometrie der Oberfläche des dreidimensionalen Objekts von dem dreidimensionalen Gittermodell mit Gittermaschen aus Solldaten der Oberfläche des dreidimensionalen Objekts ermittelt wird.

11. Verfahren nach Anspruch 10, **dadurch gekennzeichnet, dass** bei einer zu großen ermittelten Abweichung (17) der messtechnisch erfassten Geometrie der Oberfläche des dreidimensionalen Objekts von dem dreidimensionalen Gittermodell mit Gittermaschen aus Solldaten der Oberfläche des dreidimensionalen Objekts ein Signal (14) betreffend Ort und/oder Beschaffenheit der Abweichung ausgegeben wird.

12. Verfahren nach Anspruch 11, **dadurch gekennzeichnet, dass** das Gittermodell mit Gittermaschen aus den Solldaten der Oberfläche des dreidimensionalen Objekts bei Abweichungen von der messtechnisch erfassten Geometrie der Oberfläche des dreidimensionalen Objekts an die messtechnisch erfasste Geometrie der Oberfläche des dreidimensionalen Objekts angepasst wird (18).

13. Verfahren nach Anspruch 12, **dadurch gekennzeichnet, dass** die für eine Umgebung ermittelte Orientierung der Faserstruktur um eine dritte Dimension zu einer dreidimensionalen lokalen Orientierung mit einer Raumkoordinate ergänzt wird, die sich erst nach Projektion der ermittelten Orientierung der Faserstruktur auf das dreidimensionale Gittermodell mit Gittermaschen für die betrachtete Umgebung ergibt.

14. Vorrichtung (19) zur Ermittlung der Orientierung wenigstens einer Faserstruktur, insbesondere einer Faserstruktur in einem Faserverbundwerkstoff (20), mit mindestens einem optischen Aufnahmegerät (21), mit mindestens einem Beleuchtungssystem (22), mit mindestens einem beweglichen Bauteil (24) zur Ausrichtung des optischen Aufnahmegeräts (21) in interessierende Raumrichtungen und mit mindestens einer Auswerteeinheit (25), wobei das optische Aufnahmegerät (21) an dem beweglichen Bauteil (24) befestigt ist und wobei das optische Aufnahmegerät (21) und/oder das Beleuchtungssystem (22) und/oder das bewegliche Bauteil (24) und/oder die Auswerteeinheit (25) zur Umsetzung des Verfahrens nach einem der Ansprüche 1 bis 12 ausgestaltet sind/ist.
